# DEMANDE DE BREVET EUROPEEN

(11) **EP 4 046 891 A1**
(43) Date de publication de la demande: **24.08.2022**
(21) Numéro de dépôt: 21315023.8
(22) Date de dépôt: 19.02.2021
(51) Int. Cl.: B62B 3/00, B62B 3/04, B62B 5/00, B62D 51/04

(54) **DISPOSITIF DE MANUTENTION MOTORISÉ POUR POUSSER ET/OU TRACTER AU MOINS UN CHARIOT ET ENSEMBLE DE MANUTENTION COMPRENANT UN TEL DISPOSITIF**

(71) Demandeur: Brevac, 75008 Paris (FR); Goupil Industrie, 45190 Beaugency (FR)
(72) Inventeur: Launay, Patrick, 67960 Entzheim (FR); Balland, Gilles, 45160 Ardon (FR)
(74) Mandataire: Cabinet Nuss

(57) **Abrégé**

La présente invention a pour objet un dispositif de manutention motorisé pour pousser et/ou tracter au moins chariot, ledit dispositif comprenant un véhicule (1) motorisé pousseur et/ou tracteur apte et destiné à être accouplé à un chariot (2) sur roulettes (2a), ledit véhicule (1) comportant une base (1a) montée sur des roulettes (1b) et sur une unité de roue motorisée (1c), ladite base (1a) du véhicule (1) étant apte et destinée à venir, au moins en partie, se positionner sous la base (2a) d'un chariot (2) pour réaliser leur accouplement.

Il comprend en outre au moins un premier élément d'accouplement (3) femelle, respectivement mâle et étant apte et destiné à être fixé sous la base (2b) d'un chariot (2) et un deuxième élément d'accouplement (10a) mâle, respectivement femelle, formant une partie de la base (1a) du véhicule (1) située à l'avant, lesdits premier et deuxième éléments d'accouplement (3, 10a) étant de forme complémentaire et aptes à coopérer l'un avec l'autre par emboîtement mutuel pour être mis dans un état emboîté permettant d'accoupler le véhicule (1) avec un chariot (2) équipé d'un tel élément d'accouplement par emboîtement (3) et, éventuellement, des moyens de verrouillage (4) de l'accouplement.

## Description

La présente invention concerne le domaine de la manutention et a pour objet un dispositif de manutention motorisé pour pousser et/ou tracter au moins un chariot. Elle a également pour objet un ensemble de manutention comprenant un tel dispositif.

Dans le domaine de la manutention et du transport on connait déjà des chariots, généralement équipés de roues fixes et/ou de roues pivotantes, permettant de transporter en toute sécurité des charges lourdes ou moins lourdes et de tailles différentes sur tous types de sols.

Plusieurs types de chariots sont disponibles actuellement sur le marché tels que des chariots avec ou sans ridelles, amovibles ou fixes ou encore des chariots avec plateau ou étagères au-dessus dudit plateau.

Ces chariots sont poussés ou tractés manuellement par un utilisateur d'un point à un autre et certains chariots bénéficient d'une motorisation permettant d'assister la poussée ou la traction par l'utilisateur.

Pour ce qui concerne les chariots assistés par une motorisation, certains sont automoteurs, c'est-à-dire qu'ils comportent leur propre motorisation et commande de motorisation et d'autres sont adaptés pour être couplés à un pousseur/tracteur équipé d'une motorisation et de sa commande. Le pousseur/tracteur est généralement prévu pour pousser ou tracter un seul chariot accouplé à ce dernier ou un train de chariots dont le premier chariot est accouplé audit pousseur/tracteur.

Un tel pousseur/tracteur de chariot(s) est divulgué par le document US2018/0304912. Ce document divulgue en effet un dispositif de poussée motorisé couplé à un chariot à plateau ou à étagères. Le dispositif de poussée motorisé comprend une base en forme de plateau monté sur quatre roulettes pivotantes, deux roulettes avant et deux roulettes arrière, un moteur situé sous ladite base et couplé auxdites roues avant, une poignée de commande droite et une poignée de commande gauche, une poignée de guidage et une batterie alimentant me moteur. Le chariot comporte une base en forme de plateau monté sur quatre roues extérieures pivotantes et deux roues de guidage centrales aptes à être abaissées pour être en contact avec le sol ou relevées. La base du dispositif de poussée motorisé est située à une hauteur au-dessus du sol, c'est-à-dire la surface sur laquelle se déplace ledit dispositif de poussée, lui permettant d'être positionné sous la base du chariot à lorsque ce dernier est couplé audit dispositif de poussée motorisé. Le chariot comporte en outre à l'arrière de la base une barre de couplage permettant son couplage avec le dispositif de poussée motorisé à l'aide de loquets ou de verrous montés à l'arrière de la base dudit dispositif.

Toutefois, un dispositif de poussée motorisé du type de celui divulgué par le document US2018/0304912 ne présente pas des qualités techniques suffisantes pour lui conférer, notamment, une bonne manœuvrabilité et/ou une sécurité d'utilisation suffisante.

La présente invention a pour but de pallier ces inconvénients en proposant un dispositif de manutention motorisé pour pousser et/ou tracter au moins un chariot de transport, plus manœuvrable que les dispositifs actuels, tout en améliorant la sécurité de l'utilisateur.

A cet effet, le dispositif de manutention motorisé, selon la présente invention, pour pousser et/ou tracter au moins un chariot, ledit dispositif comprenant un véhicule motorisé pousseur et/ou tracteur s'étendant le long d'un axe longitudinal, dit premier axe longitudinal, et étant apte et destiné à être accouplé à un chariot muni de roulettes pour pousser ou tracter ce dernier, ledit véhicule comportant une base montée sur des roulettes et sur une unité de roue motorisée, au moins une poignée de guidage, des moyens de commande et/ou de contrôle permettant la commande et/ou le contrôle de l'unité de roue motorisée et une alimentation en énergie du type batterie, ladite base du véhicule étant apte et destinée à venir, au moins en partie, se positionner sous la base d'un chariot s'étendant le long d'un axe longitudinal, dit deuxième axe longitudinal, pour réaliser leur accouplement, se caractérise essentiellement en ce qu'il comprend en outre au moins un premier élément d'accouplement femelle, respectivement mâle, s'étendant le long d'un axe longitudinal, dit troisième axe longitudinal, et étant apte et destiné à être fixé sous la base d'un chariot en étant centré sur le deuxième axe longitudinal et un deuxième élément d'accouplement mâle, respectivement femelle, formant une partie de la base du véhicule située à l'avant et centrée sur le premier axe longitudinal, lesdits premier et deuxième éléments d'accouplement étant de forme complémentaire et aptes à coopérer l'un avec l'autre par emboîtement mutuel pour être mis dans un état emboîté permettant d'accoupler le véhicule avec un chariot équipé d'un tel élément d'accouplement par emboîtement et, éventuellement, des moyens de verrouillage de l'accouplement.

La présente invention a également pour objet un ensemble de manutention comprenant un dispositif de manutention motorisé et au moins un chariot, caractérisé en ce que ledit dispositif de manutention motorisé consiste en un dispositif de manutention motorisé selon la présente invention et en ce que le ou chaque premier élément d'accouplement femelle, respectivement mâle, est fixé sous la base du ou de l'un des chariot(s) en étant centré sur l'axe longitudinal dudit chariot.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
[Fig. 1] représente une vue en perspective d'un ensemble de manutention comprenant un dispositif de manutention motorisé selon la présente invention et au moins un chariot, dans une configuration où le véhicule est accouplé avec un chariot à ridelles et étagères,
[Fig. 2] montre l'ensemble représenté sur la figure 1, selon un autre angle de vue montrant le dessous de l'ensemble,
[Fig. 3a] représente une vue en coupe transversale partielle de l'ensemble représenté sur la figure 1 au niveau de sa partie comprenant les moyens de verrouillage de l'accouplement,
[Fig. 3b] est une vue de détail des moyens de verrouillage de la figure 3a,
[Fig. 4] représente une vue partielle de l'ensemble représenté sur la figure 2 au début de la phase d'emboîtement des premier et deuxième éléments d'accouplement,
[Fig. 5] montre l'ensemble représenté sur la figure 4 dans une phase plus avancée de l'emboitement,
[Fig. 6] montre l'ensemble représenté sur la figure 5 à l'état partiellement emboîté du doigt de centrage et/ou d'accrochage dans le trou de centrage et/ou d'accrochage,
[Fig. 7] montre l'ensemble représenté sur la figure 6 à l'état emboîté des premier et deuxième éléments d'accouplement et à l'état emboîté du doigt de centrage et/ou d'accrochage.

Les figures annexées montrent un dispositif de manutention motorisé, selon la présente invention, pour pousser et/ou tracter au moins un chariot, ledit dispositif comprenant un véhicule 1 motorisé pousseur et/ou tracteur s'étendant le long d'un axe longitudinal, dit premier axe longitudinal X1, et étant apte et destiné à être accouplé à un chariot 2 muni (ou monté sur) de roulettes 2a pour pousser ou tracter ce dernier. Le véhicule 1 comporte une base 1a montée sur des roulettes 1b et sur une unité de roue motorisée 1c, au moins une poignée de guidage 1d, des moyens de commande et/ou de contrôle 1h, 1i, 1j, 1k permettant la commande et/ou le contrôle de l'unité de roue motorisée 1c et une alimentation en énergie 1e du type batterie. La base 1a du véhicule 1 est apte et destinée à venir, au moins en partie, se positionner sous la base 2a d'un chariot 2 s'étendant le long d'un axe longitudinal, dit deuxième axe longitudinal X2, pour réaliser leur accouplement, c'est-à-dire l'accouplement dudit chariot 2 et dudit véhicule 1.

Conformément à la présente invention, un tel dispositif comprend en outre au moins un premier élément d'accouplement 3 femelle, respectivement mâle, s'étendant le long d'un axe longitudinal, dit troisième axe longitudinal X3, et étant apte et destiné à être fixé sous la base 2b d'un chariot 2 en étant centré sur le deuxième axe longitudinal X2 et un deuxième élément d'accouplement 10a mâle, respectivement femelle, formant une partie de la base 1a du véhicule 1 située à l'avant et centrée sur le premier axe longitudinal X1, lesdits premier et deuxième éléments d'accouplement 3, 10a étant de forme complémentaire et aptes à coopérer l'un avec l'autre par emboîtement mutuel pour être mis dans un état emboîté permettant d'accoupler le véhicule 1 avec un chariot 2 équipé d'un tel élément d'accouplement par emboîtement 3 et, éventuellement, des moyens de verrouillage 4 de l'accouplement.

De préférence, les roulettes 1b du véhicule sont pivotantes. De même, les roulettes 2a du chariot 2 sont préférentiellement pivotantes.

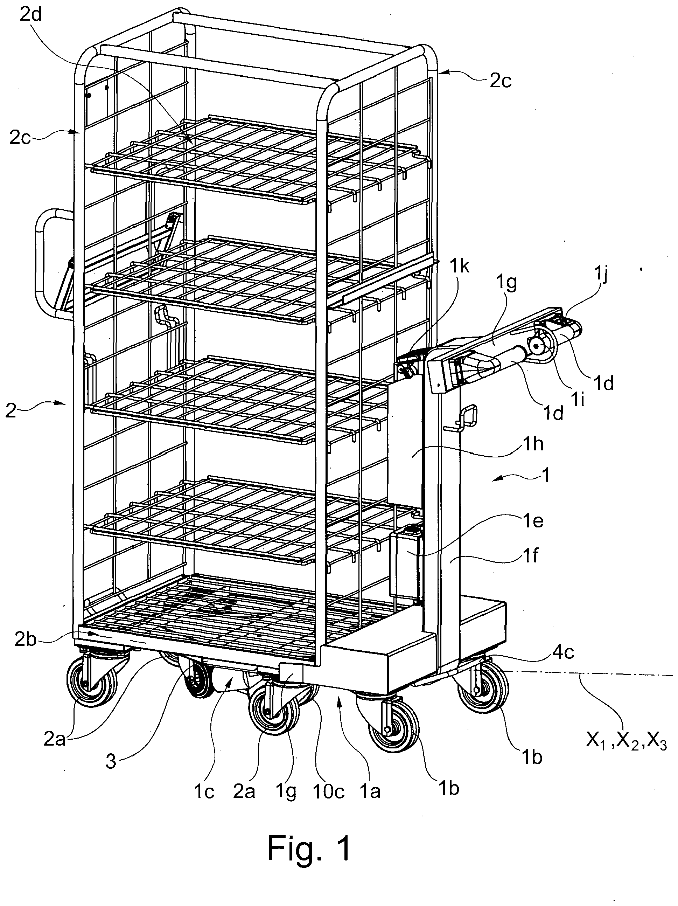

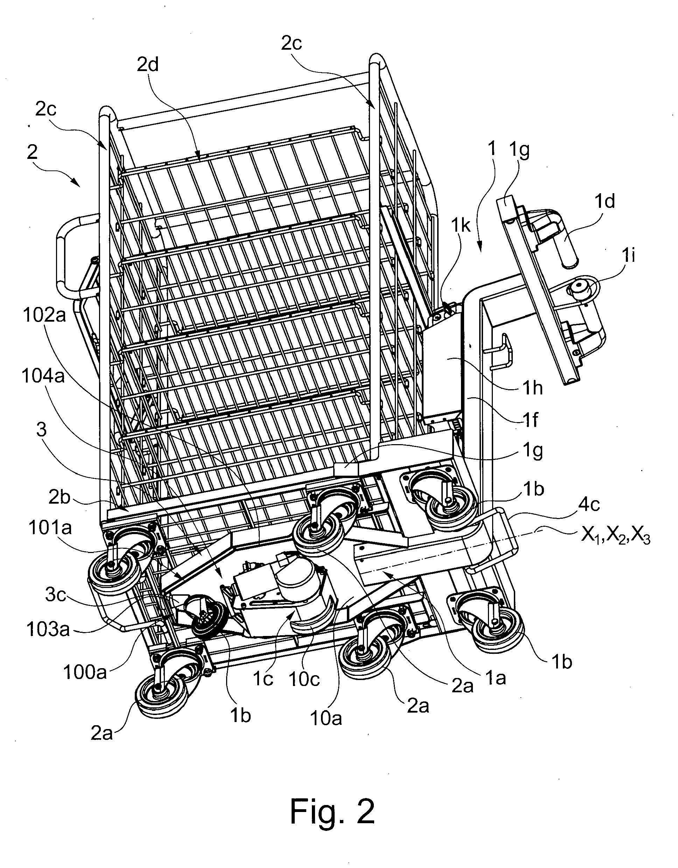

Si on se réfère notamment aux figures 1 et 2, on peut voir qu'un tel chariot 2 équipé d'un élément d'accouplement par emboîtement 3 peut être par exemple un chariot 2 à ridelles 2c, fixes ou amovibles. On peut voir également qu'un tel chariot 2 peut être prévu pour comporter une ou plusieurs étagères 2d. D'autres types de chariots 2, non représentés sur les figures annexées, peuvent être prévu pour être équipés d'un élément d'accouplement par emboîtement 3 selon la présente invention tel que des chariots 2 sans ridelles, c'est-à-dire uniquement avec un plateau formant au moins une partie de la base 2b.

On comprend que la présente invention peut prévoir deux formes de réalisation mâle/femelle pour l'emboîtement :
- l'une, représentée sur les figures annexées, dans laquelle le deuxième élément d'accouplement 10a monté sur le véhicule 1 est mâle et le premier élément d'emboîtement 3 destiné à être monté sur un chariot 2 est femelle,
- le cas échéant, l'autre, non représentée sur les figures annexées, dans laquelle le deuxième élément d'accouplement 10a monté sur le véhicule 1 est femelle et le premier élément d'emboîtement 3 destiné à être monté sur un chariot 2 est mâle.

Plus particulièrement, le deuxième élément d'accouplement 10a mâle, le cas échéant le premier élément d'accouplement 3 mâle, comprend une extrémité 100a d'emboîtement. En outre, le premier élément d'accouplement 3 femelle, le cas échéant le deuxième élément d'accouplement 10a femelle, comporte deux extrémités 3a, 3b opposées longitudinalement, à savoir une extrémité 3a ouverte apte à recevoir ladite extrémité 100a d'emboitement du deuxième élément d'accouplement 10a mâle, le cas échéant du premier élément d'accouplement mâle 3, en vue de réaliser l'emboîtement mutuel et une extrémité 3b de fond définissant intérieurement le fond de l'emboîtement.

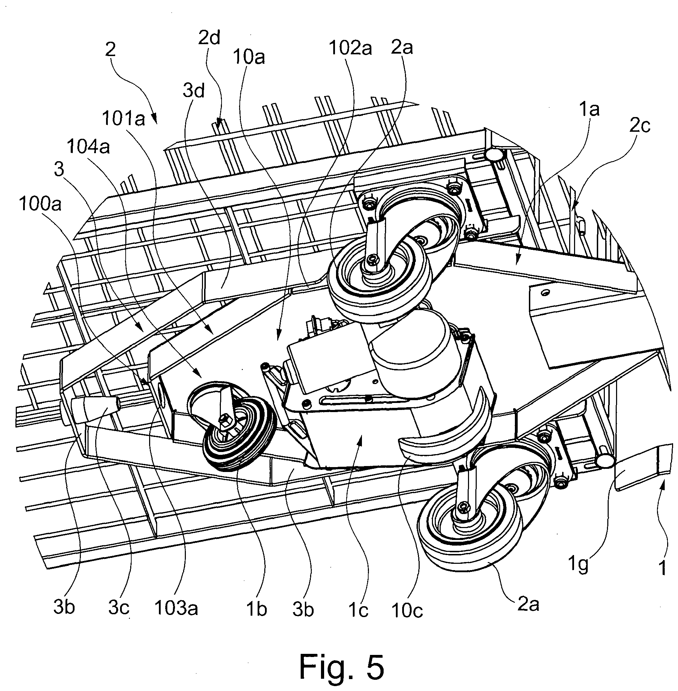

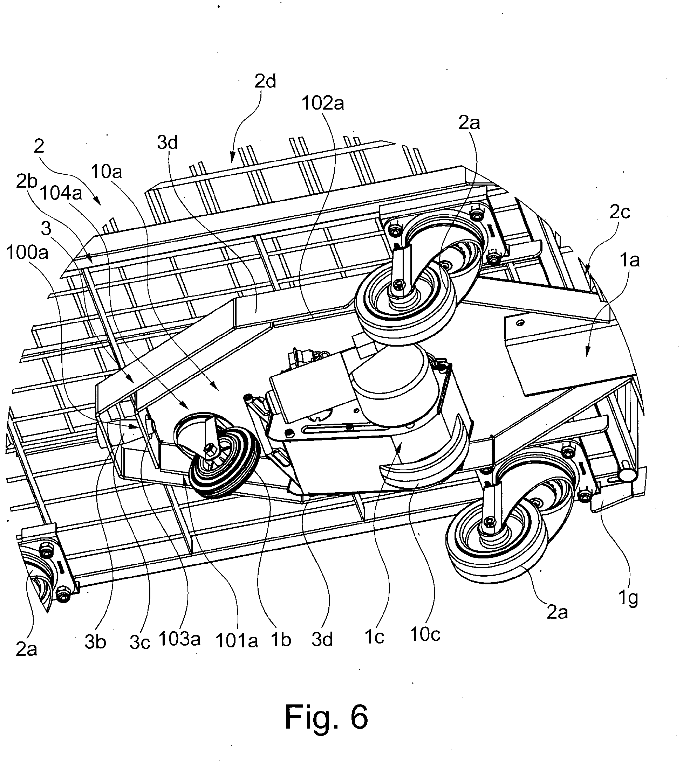

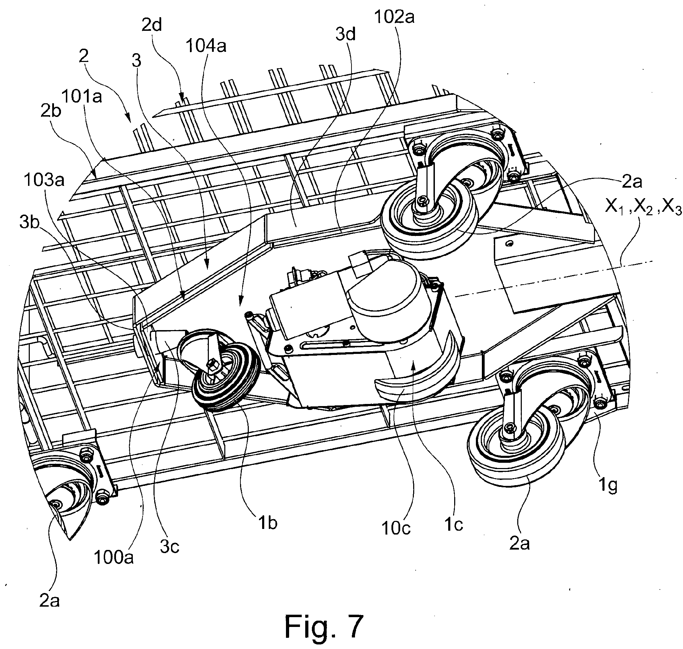

Dans une forme de réalisation préférentielle, le deuxième élément d'accouplement 10a mâle, le cas échéant le premier élément d'accouplement 3 mâle, comprend une partie d'extrémité 101a comportant l'extrémité 100a d'emboîtement et allant en se rétrécissant jusqu'à cette dernière ou étant évasée vers l'arrière depuis cette dernière (voir notamment les figures 2, 4, 5, 6 et 7). De préférence, la partie d'extrémité 101a est en forme de U évasée et l'extrémité 100a d'emboîtement forme la base dudit U. Ces caractéristiques ont pour effet/avantage de faciliter l'insertion du deuxième élément d'accouplement 10a mâle, le cas échéant du premier élément d'accouplement 3 mâle, dans le premier élément d'accouplement 3 femelle, le cas échéant dans le deuxième élément d'accouplement 10a femelle. Elles permettent en outre de réaliser l'insertion même si les roulettes 2a du chariot 2 sont orientées vers l'intérieur du faite de leur pivotement selon cette orientation.

De préférence, comme on peut le voir notamment sur les figures 2, 4, 5, 6 et 7, le deuxième élément d'accouplement 10a mâle, le cas échéant le premier élément d'accouplement 3 mâle, présente une partie centrale de guidage prolongeant ladite partie d'extrémité 101a en arrière de cette dernière et étant délimitée latéralement par deux côtés de guidage 102a latéraux situés de part et d'autre du premier axe longitudinal X1, le cas échéant du troisième axe longitudinal X3. En outre, lesdits côtés de guidage 102a latéraux s'étendent parallèlement audit premier axe longitudinal X1, le cas échéant audit troisième axe longitudinal X3. Cette caractéristique a pour effet de permettre un meilleur guidage du véhicule 1 dans le chariot 2 pour réaliser leur accouplement mutuel. Elle permet également un meilleur guidage latéral du véhicule 1 à l'état accouplé avec le chariot 2, notamment lorsque la roue 10c de l'unité de roue motorisée 1c est relevée.

L'unité motorisée 1c comprend au moins une roue 10c. La présente invention peut prévoir, de préférence, que la ou chaque roue 10c puisse être déplacée dans une position abaissée en contact avec le sol ou la surface sur laquelle se déplace le véhicule 1 et dans une position relevée ou la ou chaque roue 10c n'est plus en contact de frottements avec ledit sol ou ladite surface.

Dans un mode de réalisation préférentiel, selon une première forme de réalisation où le premier élément d'accouplement 3 est femelle comme on peut le voir notamment sur les figures 2, 4, 5, 6 et 7 annexées, le cas échéant où le deuxième élément d'accouplement 10a est femelle (cas non représenté sur les figures annexées) :
le premier élément d'accouplement 3 femelle, le cas échéant le deuxième élément d'accouplement 10a femelle, comporte un doigt de centrage et/ou d'accrochage 3c, de préférence de forme globalement cylindrique ou conique, fixé sur le fond de l'emboitement et centré sur le troisième axe longitudinal X3, le cas échéant sur le premier axe longitudinal X1, en s'étendant axialement vers l'extrémité 3a ouverte. En outre, l'extrémité 100a d'emboîtement du deuxième élément d'accouplement 10a mâle, le cas échéant du premier élément d'accouplement 3 mâle, comporte un trou de centrage et/ou d'accrochage 103a, centré sur le premier axe longitudinal X1, le cas échéant sur le troisième axe longitudinal X3. Le trou de centrage et/ou d'accrochage 103a est apte et destiné à recevoir ledit doigt de centrage et/ou d'accrochage 3c au moins à l'état d'accouplement (figures 2, 6 et 7).

Toujours dans ce mode de réalisation, dans une forme non représentée sur les figures annexées, le premier élément d'accouplement 3 femelle, le cas échéant le deuxième élément d'accouplement 10a femelle, comporte un trou de centrage et/ou d'accrochage pratiquée dans le fond d'emboitement et centré sur le troisième axe longitudinal X3, le cas échéant sur le premier axe longitudinal X1, et en ce que l'extrémité 100a d'emboitement du deuxième élément d'accouplement 10a mâle, le cas échéant l'extrémité d'emboitement du premier élément d'accouplement 3 mâle, se prolonge extérieurement et axialement par un doigt de centrage et/ou d'accrochage, centré sur le premier axe longitudinal X1, le cas échéant sur le troisième axe longitudinal X3, ledit trou de centrage et/ou d'accrochage étant apte à recevoir ledit doigt de centrage et/ou d'accrochage à l'état d'accouplement.

De préférence, le deuxième élément d'accouplement 10a mâle, le cas échéant le premier élément d'accouplement 3 mâle, présente une face inférieure 104a et porte l'unité de roue motorisée 1c qui est montée sur ladite face inférieure 104a.

Dans une forme préférentielle de la partie arrière du véhicule, le véhicule 1 comprend à l'arrière un montant 1f comportant une extrémité inférieure fixée sur la base 1a et une extrémité supérieure comportant un bras 1g du type guidon de direction portant la ou les poignées de guidage 1d, de préférence deux poignées de guidage. De préférence, le montant 1f peut supporter l'alimentation en énergie 1e du type batterie. De préférence, un tel montant 1f est dans une position centrale à l'arrière du véhicule 1, c'est à dire en s'étendant verticalement dans le plan médian longitudinal dudit véhicule 1.

Si on se réfère notamment aux figures 1 et 2, on peut voir que les moyens de commande et/ou de contrôle 1h, 1i, 1j, 1k peuvent comprendre, par exemple, un boitier de commande 1h et un bouton de commande 1i. Le boîtier de commande 1h est relié fonctionnellement à l'unité de roue motorisé 1c et audit bouton de commande 1i et peut être monté sur le montant 1f. Le boitier de commande 1h peut comprendre un boitier renfermant une carte électronique comprenant les paramètres de commande et de contrôle tels que la vitesse et le couple moteur de l'unité de roue motorisée 1c. Le bouton de commande 1i permet permettre, par exemple, de commander la vitesse, de préférence graduellement et/ou la marche avant ou arrière. La vitesse peut être paramétrée dans le boitier de commande 1h de sorte à ne pas dépasser une vitesse maximum programmée lors de l'actionnement du bouton de commande 1i. De préférence, le bouton de commande 1i peut être monté dans la ou l'une des poignée(s) de guidage 1d, par exemple à l'extrémité de cette dernière, par exemple de manière similaire à un bouton accélérateur d'une poignée de manette des gaz pour vélomoteur ou motocyclette. De préférence, les moyens de commande et de contrôle 1h, 1i, 1j, 1k peuvent comprendre en outre un écran d'affichage 1j permettant d'afficher, par exemple, la vitesse, la marche avant ou arrière ou tout autre paramètre relatif à la commande et au contrôle de l'unité de roue motorisée 1c et du véhicule 1. De préférence, les moyens de commande et de contrôle 1h, 1i, 1j, 1k peuvent encore comprendre un support de stockage 1k amovible, tel qu'une clé USB, permettant de modifier et/ou de programmer les paramètres de commande/pilotage tels que la vitesse et/ou le couple, notamment le couple au démarrage et/ou en roulant. Un tel support de stockage 1k peut être inséré dans le boitier de commande 1h. Un tel support de stockage 1k peut également être un support de stockage 1k portable du type tablette ou smartphone ou un ordinateur apte à communiquer, par exemple par voie filaire électrique ou par ondes radio, avec le boitier de commande 1h pour échanger avec ce dernier, configuré à cet effet, des informations et/ou des fichiers contenant notamment les paramètres de réglage précités.

Dans une forme préférentielle, comme on peut le voir notamment sur les figures 2, 4, 5, 6 et. 7, le deuxième élément d'accouplement 10a mâle, le cas échéant le premier élément d'accouplement 3 mâle, présente globalement une forme de prisme rectangulaire, hexagonal ou octogonal, ou une partie de ladite forme. De préférence, le premier élément d'accouplement 3 femelle, le cas échéant le deuxième élément d'accouplement 10a femelle, peut présenter une forme similaire, c'est-à-dire de prisme rectangulaire, hexagonal ou octogonal, ou une partie de ladite forme.

Dans une forme préférentielle de leur réalisation, le premier élément d'accouplement 3 et le deuxième élément d'accouplement 10a, dans leur forme mâle ou femelle, peuvent être réalisés à partir d'un assemblage de fer plats.

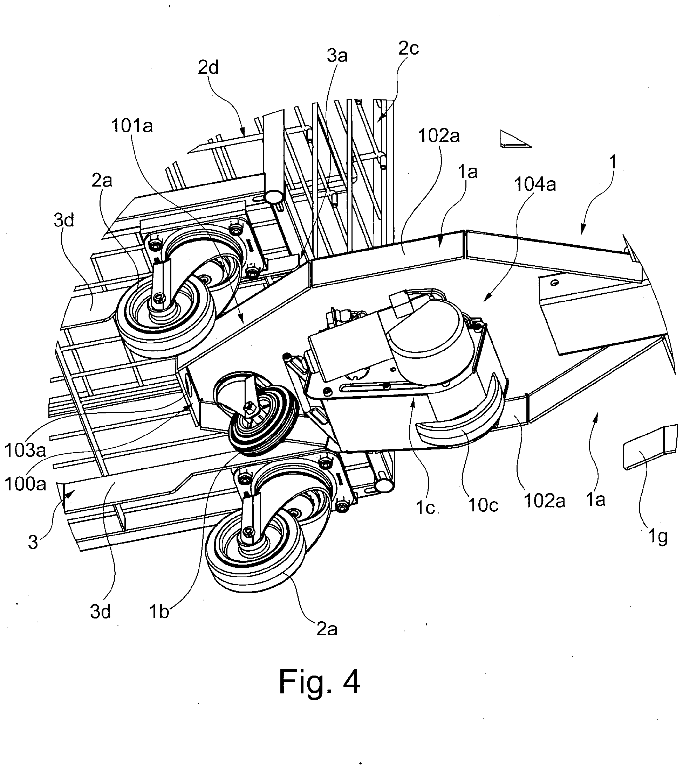

De préférence, le premier élément d'accouplement 3 et le deuxième élément d'accouplement 10a présentent une forme de cadre. Un tel cadre peut présenter, de préférence, l'une des formes prismatiques précitées. Un tel cadre est ouvert sur au moins l'un de ses côtés pour former l'extrémité 3a ouverte (voir figure 4 notamment).

Selon une caractéristique additionnelle, le véhicule 1 peut comprendre en outre au moins deux pattes de centrage 1g évasées vers l'avant et disposés de chaque côté de la base 1a dudit véhicule 1, de préférence vers l'arrière dudit véhicule 1 (voir notamment les figures 1, 2, 4, 5, 6 et 7). Ces pattes de centrage 1g permettent de faciliter le guidage lors de l'insertion pour l'emboitement (figures 1, 2, 5, 6 et 7).

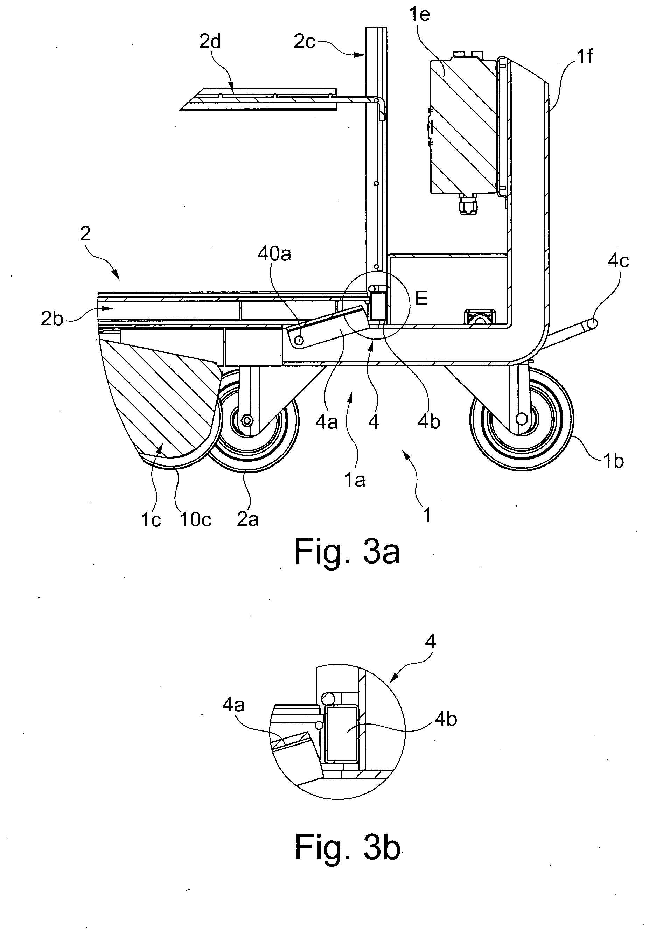

Si on se réfère maintenant aux figures 3a et 3b, on peut voir que, dans une forme de réalisation préférentielle, les moyens de verrouillage 4 comprennent au moins un loquet 4a de verrouillage monté sur ou dans la base 1a du véhicule 1 et une barre de verrouillage 4b destinée à être montée, ou étant intégrée, dans un chariot 2 destiné à être accouplé audit véhicule 1, ladite barre de verrouillage 4b s'étendant, c'est-à-dire à l'état monté ou intégré dans ledit chariot 2, perpendiculairement à son axe longitudinal X2. En outre, le ou chaque loquet 4a est mobile en déplacement, de préférence par pivotement autour d'un axe 40a perpendiculaire au premier axe longitudinal X1, entre une position escamotée assurant le déverrouillage en s'étendant sous ladite barre de verrouillage 4b à l'état d'accouplement et une position relevée de verrouillage venant contre la barre de verrouillage en avant de cette dernière à l'état d'accouplement. D'autre part, les moyens de verrouillage comprennent des moyens de commande et de liaison 4c permettant d'actionner le déplacement du ou desdits loquet(s) 4a. Les moyens de commande et de liaison 4c peuvent comprendre un organe de commande 4c actionnable par l'utilisateur et un mécanisme de liaison reliant fonctionnellement ledit organe de commande 4c au(x)dit(s) loquet(s) 4a. L'organe de commande 4c peut présenter, par exemple, la forme d'une pédale, par exemple en forme de U, de préférence placée à la base du véhicule 1, de préférence à l'arrière de ce dernier, de façon à être actionnable par le pied de l'utilisateur manœuvrant ledit véhicule 1.

De préférence, le loquet 4a peut être assujetti à ou précontraint par un ressort le rappelant dans l'une de ses positions, par exemple dans sa position relevée. Le passage de sa position relevée à sa position escamotée peut alors être réalisée par l'utilisateur actionnant l'organe de commande 4c. En outre le loquet 4a, comme on peut le voir sur les figures 4a peut être configuré de sorte que, le loquet 4a mis à l'état relevé sous la contrainte du ressort, rencontre, lors de la phase d'accouplement, sous l'effet du déplacement relatif du véhicule 1 par rapport au chariot 2, la barre de verrouillage 4b qui exerce alors sur le loquet 4a une poussée vers le bas vers sa position escamotée jusqu'à ce que la barre de verrouillage 4b ait dépassée le ou les loquet(s) 4a qui n'est alors plus en contact avec la barre de verrouillage 4b et est rappelé(s) automatiquement par le ressort dans sa position relevée assurant le verrouillage. Le loquet 4a empêche tout déplacement de la barre de verrouillage 2 dans le sens inverse.

La présente invention a également pour objet un ensemble de manutention comprenant un dispositif de manutention motorisé et au moins un chariot 2.

Toujours conformément à la présente invention, dans un tel ensemble, ledit dispositif de manutention motorisé consiste en un dispositif de manutention motorisé selon la présente invention. En outre, le ou le ou chaque premier élément d'accouplement 3 femelle, respectivement mâle, est fixé sous la base 2b du ou de l'un des chariot(s) 2 en étant centré sur l'axe longitudinal X2 dudit chariot 2.

Comme on peut le voir notamment sur les figures 1, 2, 3a, 3b, et 7, dans un tel ensemble, le dispositif de manutention motorisé est accouplé avec le ou l'un des chariot(s) 2, dit chariot 2 accouplé, le premier élément d'accouplement 3 dudit chariot 2 accouplé coopérant par emboîtement mutuel avec le deuxième élément d'accouplement 10a du véhicule 1. Eventuellement, c"est à dire dans le cas où le dispositif comprend les moyens de verrouillage 4, les moyens de verrouillage 4 assurent le verrouillage de l'accouplement.

De préférence, à l'état accouplé, comme on peut le voir notamment sur les figures 1, 2 et 7, les premier, deuxième et troisième axes longitudinaux X1, X2, X3 sont sensiblement confondus. A l'état de fixation du premier élément d'emboitement 3 sur le chariot 2, leurs axes longitudinaux X2, X3 respectifs sont préférentiellement sensiblement confondus ou forment un axe longitudinal commun. Cette caractéristique permet notamment d'obtenir un ensemble unitaire ou un bloc motorisé permettant un déplacement avec une grande stabilité.

Dans le cas, le plus courant, d'un chariot 2 comprenant quatre roulettes 2a, l'insertion de la base 1a du véhicule 1 sous la base 2b du chariot 2 pour leur accouplement est réalisée entre les deux roulettes 2a situées sur le côté du chariot 2, dit côté d'accouplement, prévu pour réaliser l'accouplement. L'extrémité 3a ouverte, le cas échéant l'extrémité d'emboitement, du premier élément d'accouplement 3 femelle, le cas échéant mâle, est alors orientée vers ledit côté d'accouplement du chariot 2. La largeur du premier élément d'emboitement 10a mâle, respectivement femelle, est donc déterminée de sorte à permettre l'insertion entre les deux roulettes 2a dudit côté d'emboitement du chariot 2. Dans le cas d'un chariot 2 de base 2b globalement rectangulaire, le côté d'accouplement est l'un des deux petits côtés opposés.

Un tel dispositif selon la présente invention permet ainsi, notamment par une meilleure manoeuvrabilité, d'optimiser les mouvements de manutention et la sécurité de l'utilisateur en réduisant notablement les risques de blessure. En outre, la disposition des éléments d'accouplement sous le chariot 2 et le véhicule 1 permet également de limiter les risques de blessure par le fait qu'aucun élément blessant ne se trouve à portée de l'utilisateur et notamment de ses jambes. Une telle sécurité permet de réduire les arrêts de travail des manutentionnaires qui se multiplient avec les systèmes actuels et les rendements imposés.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention.

## Revendications

1. Dispositif de manutention motorisé pour pousser et/ou tracter au moins un chariot, ledit dispositif comprenant un véhicule (1) motorisé pousseur et/ou tracteur s'étendant le long d'un axe longitudinal, dit premier axe longitudinal (X1), et étant apte et destiné à être accouplé à un chariot (2) muni de roulettes (2a) pour pousser ou tracter ce dernier, ledit véhicule (1) comportant une base (1a) montée sur des roulettes (1b) et sur une unité de roue motorisée (1c), au moins une poignée de guidage (1d), des moyens de commande et/ de contrôle (1h, 1i, 1j, 1k) permettant la commande et/ou le contrôle de l'unité de roue motorisée (1c) et une alimentation en énergie (1e) du type batterie, ladite base (1a) du véhicule (1) étant apte et destinée à venir, au moins en partie, se positionner sous la base (2a) d'un chariot (2) s'étendant le long d'un axe longitudinal, dit deuxième axe longitudinal (X2), pour réaliser leur accouplement, **caractérisé en ce qu'**il comprend en outre au moins un premier élément d'accouplement (3) femelle, respectivement mâle, s'étendant le long d'un axe longitudinal, dit troisième axe longitudinal (X3), et étant apte et destiné à être fixé sous la base (2b) d'un chariot (2) en étant centré sur le deuxième axe longitudinal (X2) et un deuxième élément d'accouplement (10a) mâle, respectivement femelle, formant une partie de la base (1a) du véhicule (1) située à l'avant et centrée sur le premier axe longitudinal (X1), lesdits premier et deuxième éléments d'accouplement (3, 10a) étant de forme complémentaire et aptes à coopérer l'un avec l'autre par emboîtement mutuel pour être mis dans un état emboîté permettant d'accoupler le véhicule (1) avec un chariot (2) équipé d'un tel élément d'accouplement par emboîtement (3) et, éventuellement, des moyens de verrouillage (4) de l'accouplement.

2. Dispositif de manutention motorisé, selon la revendication 1, **caractérisé en ce que** le deuxième élément d'accouplement (10a) mâle, le cas échéant le premier élément d'accouplement (3) mâle, comprend une extrémité (100a) d'emboîtement et **en ce que** le premier élément d'accouplement (3) femelle, le cas échéant le deuxième élément d'accouplement (10a) femelle, comporte deux extrémités opposées longitudinalement, à savoir une extrémité (3a) ouverte apte à recevoir ladite extrémité (100a) d'emboîtement du deuxième élément d'accouplement (10a), mâle, le cas échéant du premier élément d'accouplement mâle (3), en vue de réaliser l'emboîtement mutuel et une extrémité (3b) de fond définissant intérieurement le fond de l'emboîtement.

3. Dispositif de manutention motorisé, selon la revendication 2, **caractérisé en ce que** le deuxième élément d'accouplement (10a) mâle, le cas échéant le premier élément d'accouplement (3) mâle, comprend une partie d'extrémité (101a) comportant l'extrémité (100a) d'emboîtement et allant en se rétrécissant jusqu'à cette dernière ou étant évasée vers l'arrière depuis cette dernière.

4. Dispositif de poussée manutention, selon la revendication 3, **caractérisé en ce que** la partie d'extrémité est en forme de U évasée et **en ce que** l'extrémité (100a) d'emboîtement forme la base dudit U.

5. Dispositif de manutention motorisé, selon l'une quelconque des revendications 2 à 4, **caractérisé en ce que** le deuxième élément d'accouplement (10a) mâle, le cas échéant le premier élément d'accouplement (3) mâle, présente une partie centrale de guidage prolongeant ladite partie d'extrémité en arrière de cette dernière et étant délimitée latéralement par deux côtés de guidage (102a) latéraux situés de part et d'autre du premier axe longitudinal (X1), le cas échéant du troisième axe longitudinal (X3) et s'étendant parallèlement audit premier axe longitudinal (X1), le cas échéant audit troisième axe longitudinal (X3).

6. Dispositif de manutention motorisé, selon l'une quelconque des revendications 2 à 5, **caractérisé en ce que** le premier élément d'accouplement (3) femelle, le cas échéant le deuxième élément d'accouplement (10a) femelle, comporte un doigt de centrage et/ou d'accrochage (3c), de préférence de forme globalement cylindrique ou conique, fixé sur le fond de l'emboitement et centré sur le troisième axe longitudinal (X3), le cas échéant sur le premier axe longitudinal (X1), en s'étendant axialement vers l'extrémité (3a) ouverte et **en ce que** l'extrémité (100a) d'emboîtement du deuxième élément d'accouplement (10a) mâle, le cas échéant du premier élément d'accouplement (3a) mâle, comporte un trou de centrage et/ou d'accrochage (103a) frontal, centré sur le premier axe longitudinal (X1), le cas échéant sur le troisième axe longitudinal (X3), ledit trou de centrage et/ou d'accrochage (103a) étant apte et destiné à recevoir ledit doigt de centrage et/ou d'accrochage (3c) à l'état d'accouplement.,

7. Dispositif de manutention motorisé, selon l'une quelconque des revendications 2 à 5, **caractérisé en ce que** le premier élément d'accouplement (3) femelle, le cas échéant le deuxième élément d'accouplement (10a) femelle, comporte un trou de centrage et/ou d'accrochage pratiquée dans le fond (3b) d'emboitement et centré sur le troisième axe longitudinal (X3), le cas échéant sur le premier axe longitudinal (X1), et **en ce que** l'extrémité (100a) d'emboitement du deuxième élément d'accouplement (10a) mâle, le cas échéant du premier élément d'accouplement (3) mâle, se prolonge extérieurement et axialement par un doigt de centrage et/ou d'accrochage, centré sur le premier axe longitudinal (X1), le cas échéant sur le troisième axe longitudinal (X3), ledit trou de centrage et/ou d'accrochage étant apte à recevoir ledit doigt de centrage et/ou d'accrochage (3c) à l'état d'accouplement.

8. Dispositif de manutention motorisé, selon l'une quelconque des revendications 1 à 7, **caractérisé en ce que** le deuxième élément d'accouplement (10a) mâle présente une face inférieure (104a) et porte l'unité de roue motorisée (1c) montée sur ladite face inférieure (104a).

9. Dispositif de manutention motorisé, selon l'une quelconque des revendications 1 à 8, **caractérisé en ce que** le véhicule (1) comprend à l'arrière un montant (1f) comportant une extrémité inférieure fixée sur la base (1a) et une extrémité supérieure comportant un bras (1g) du type guidon de direction portant la ou les poignées de guidage (1d), de préférence deux poignées de guidage.

10. Dispositif de manutention motorisé, selon l'une quelconque des revendications 1 à 9, **caractérisé en ce que** le deuxième élément d'accouplement (10a) mâle, le cas échéant le premier élément d'accouplement (3) mâle, présente globalement une forme de prisme rectangulaire, hexagonal ou octogonal, ou une partie de ladite forme.

11. Dispositif de manutention motorisé, selon l'une quelconque des revendications 1 à 10, **caractérisé en ce que** les moyens de verrouillage (4) comprennent au moins un loquet (4a) de verrouillage monté sur ou dans la base (1a) du véhicule (1) et une barre de verrouillage (4b) destinée à être montée, ou étant intégrée, dans un chariot (2) destiné à être accouplé audit véhicule (1) en s'étendant perpendiculairement à l'axe longitudinal (X2) dudit chariot (2), le ou chaque loquet (4a) étant mobile en déplacement, de préférence par pivotement autour d'un axe (40a) perpendiculaire au premier axe longitudinal (X1), entre une position escamotée assurant le déverrouillage en s'étendant sous ladite barre de verrouillage (4b) à l'état d'accouplement et une position relevée de verrouillage venant contre la barre de verrouillage (4b) en avant de cette dernière à l'état d'accouplement et **en ce qu'**il comprend des moyens de commande et de liaison (4c) permettant d'actionner le déplacement du ou desdits loquet(s) (4a).

12. Ensemble de manutention comprenant un dispositif de manutention motorisé et au moins un chariot (2), **caractérisé en ce que** ledit dispositif de manutention motorisé consiste en un dispositif de manutention motorisé selon l'une quelconque des revendications 1 à 11 et **en ce que** le ou chaque premier élément d'accouplement (3) femelle, respectivement mâle, est fixé sous la base (2b) du ou de l'un des chariot(s) (2) en étant centré sur l'axe longitudinal (X2) dudit chariot (2).

13. Ensemble de manutention, selon la revendication 12, **caractérisé en ce que** le dispositif de manutention motorisé est accouplé avec le ou l'un des chariot(s) (2), dit chariot (2) accouplé, le premier élément d'accouplement (3) dudit chariot (2) accouplé coopérant par emboîtement mutuel avec le deuxième élément d'accouplement (10a) du véhicule (1) et, éventuellement, les moyens de verrouillage (4) assurant le verrouillage de l'accouplement.

14. Ensemble de manutention, selon la revendication 13, **caractérisé en ce que** les premier, deuxième et troisième axes longitudinaux (X1, X2, X3) sont sensiblement confondus ou forment un axe longitudinal commun.
